# EUROPEAN PATENT SPECIFICATION

(11) **EP 3 960 437 B1**
(45) Date of publication and mention of the grant of the patent: **18.09.2024**
(21) Application number: 21183258.9
(22) Date of filing: 01.07.2021
(51) Int. Cl.: B29C 33/30, B29C 44/04, A43D 111/00, B29D 35/00, B29K 75/00

(54) **TILTABLE MOULD-HOLDER**
KIPPBARER WERKZEUGTRÄGER
PORTE-MOULE RABATTABLE

(30) Priority: 01.09.2020 IT 202000020773
(43) Date of publication of application: 02.03.2022
(73) Proprietor: SONZOGNI CAMME S.P.A., 24045 Fara Gera d'Adda, Bergamo (IT)
(72) Inventor: FUSTINONI, Roberto, 25036 PALAZZOLO SULL'OGLIO (BS) (IT); TOMASONI, Roberto, 24040 CISERANO (BG) (IT)
(74) Representative: Ripamonti, Enrico

(56) References cited:
- DE-A1- 3 932 307
- FR-A- 1 523 836
- JP-A- H03 202 329
- US-A- 3 426 110
- US-A1- 2015 118 341

## Description

The present invention relates to a tiltable mould holder, designed for use with moulds for the production of polyurethane (PU) articles and, more in particular, for the production of soles for footwear.

During moulding of the articles, the polyurethane is poured into the mould and, after a few seconds, expansion occurs. In this step, there is a slight separation of the colour and a demarcation line is formed between the liquid phase and the expansion phase.

Besides the negative aesthetic appearance of the result, there is also a deterioration in the quality of the moulded material.

Systems exist to reduce this phenomenon by moving the mould during production.

An example of this system is found in the document WO2019/224661. It uses two distinct rotation axes, substantially orthogonal, which cause raising of the supporting surface of the mould with respect to the supporting surface of the mould holder, hence increasing the vertical dimensions of the structure. To maintain the moulds at an ergonomically favourable height, existing machines must be redesigned to lower the supporting surface of the mould holders.

Moreover, if wishing to tilt the mould in a direction not parallel to the direction of one of the two rotation axes, the two axes must be used simultaneously. As they are not incident, not lying on the same plane, simultaneous rotation along the two axes causes increased projection of the mould outside its footprint. Furthermore, due to the above, the force of gravity applied in the centre of mass of the mould can have a significant lever arm with respect to the rotation axes and therefore the actuators, provided to support the mould during tilting, are subjected to greater stress.

The documents FR1523836 and DE3932307 show a mould holder as described in the preamble of claim 1.

The object of the present invention is to provide a tiltable mould holder that solves the problems of the known art.

A further object is to provide a tiltable mould holder that is easy to produce.

Another object is to provide a tiltable mould holder having a limited footprint.

Yet another object is to provide a tiltable mould holder with a simple movement.

According to the present invention, these objects and others yet are achieved by a tiltable mould holder according to claim 1.

These objects are also achieved by a method for tilting a mould holder for the production of semi-finished polyurethane products according to claim 1 comprising the steps of: maintaining said rotary table fixed; rotating an assembly of kinematic mechanisms that allow said mould holder to tilt.

Further features of the invention are described in the dependent claims.

The features and the advantages of the present invention will be evident from the following detailed description of a practical embodiment thereof, illustrated by way of non-limiting example in the accompanying drawings, wherein:

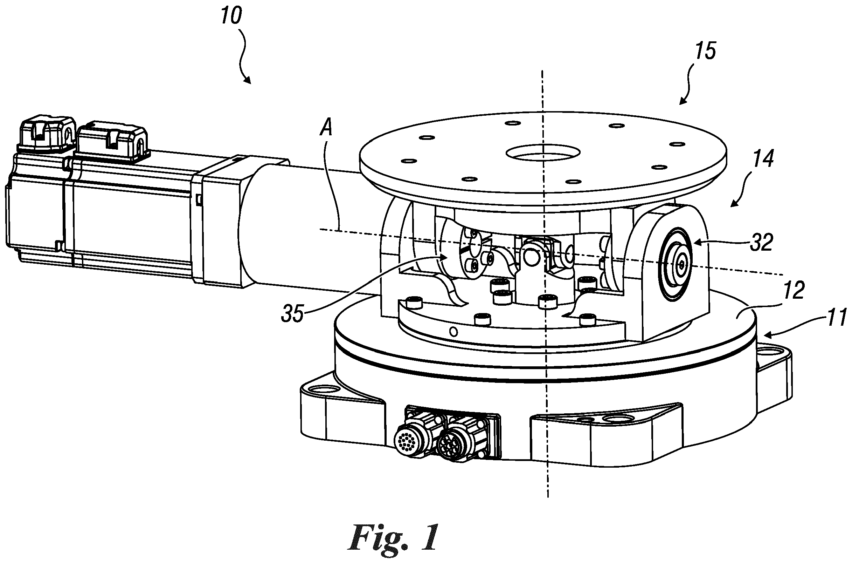

Fig. 1 shows a perspective view of tiltable mould holder in a flat position, according to the present invention;

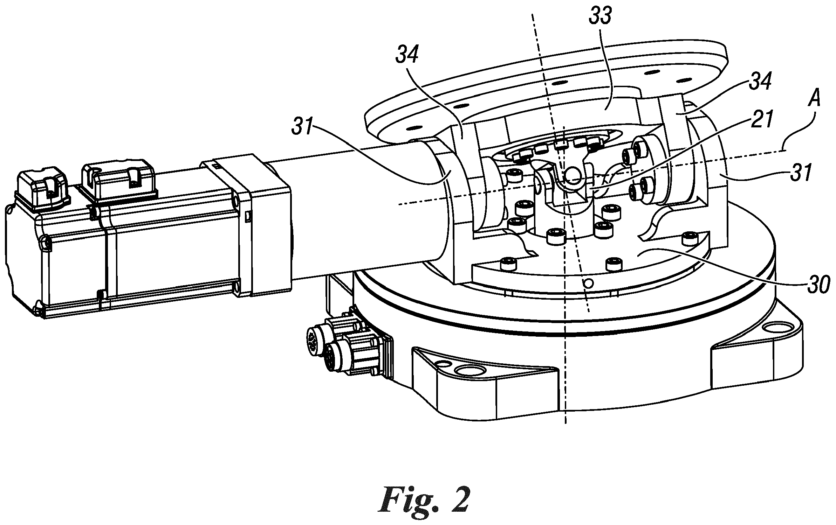

Fig. 2 shows a perspective view of a tiltable mould holder in a tilted position, according to the present invention;

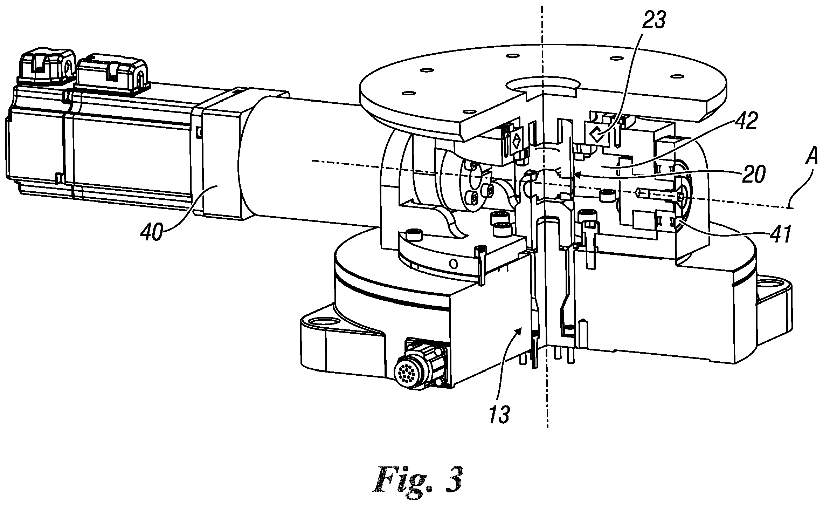

Fig. 3 shows a perspective view of a tiltable mould holder in a flat position and in cross section, according to the present invention.

With reference to the accompanying figures, a tiltable mould holder 10, according to the present invention, comprises a rotary table 11 with substantially vertical rotation axis, fixable on a supporting surface (not shown).

The rotary table 11 comprises a surface 12, the central portion of which can rotate by means of a motor internal or external thereto.

The surface 12 is provided with a through hole 13 coaxial to the output axis or alternatively with a non-rotating central part concentric to the rotating output.

The mould holder 10 then comprises an assembly of kinematic mechanisms 14 positioned above the rotary table 11 and then a mould holder surface 15 positioned above the assembly of kinematic mechanisms 14.

An anti-rotation system 20 of the mould holder surface 15, which makes it possible to tilt it along any axis orthogonal to the rotation axis of the rotary table 11, is positioned in the hole 13 of the rotary table 11. The anti-rotation system 20 is fixed to the supporting surface and therefore does not rotate with the rotary table.

The anti-rotation system 20 is produced with a universal joint 21.

The mould holder surface 15 is connected to the anti-rotation system 20 through a bearing 23 (fixed part of the bearing).

Therefore, the lower part of the universal joint 21 is integral with the supporting surface (fixed) and the upper part of the universal joint 21 is integral with the bearing 23 and consequently with the mould holder surface 15.

In order for the system to operate, the centre of rotation of the universal joint 21, identified by the intersection of the two orthogonal axes of the crosspiece, must belong to the tilt axis A, while the two drive shafts of the universal joint must be concentric with the rotation axis of the rotary table 11 and with the rotation axis of the bearing 23 of the mould holder surface 15, respectively. Advantageously, only one drive shaft of the universal joint 21 is blocked against translation with respect to its coupling shaft.

The assembly of kinematic mechanisms 14 comprises a lower base 30 to be fixed on the rotatable portion of the surface 12. Two plates 31, opposite each other, each having a central hole 32, extend upwards from the base 30. The central holes 32 are coaxial and define the tilt axis A.

It also comprises a further upper base 33 also having two plates 34, arranged extending downwards, opposite each other, each having a central hole 35. The axis of the two central holes 35 lies on the tilt axis A.

The two plates 31 and the two plates 34 are designed to coact with each other.

The upper base 33 is connected to the bearing 23 (rotating part of the bearing), which is in turn connected (fixed part of the bearing) to the mould holder 15, so that it can rotate with respect to the mould holder surface 15.

The assembly of kinematic mechanisms 14 also comprises a gearmotor 40 having a rotation axis, perpendicular to the rotary table 11, coincident with the tilt axis A.

The axis of the gearmotor 40, coincident with the tilt axis A, passes through a first hole 32 of a plate 31 and is connected thereto by means of a bearing 41, then passes through the hole 35 of the plate 34 and is fixed integral thereto.

Opposite the axis of the gearmotor 40, a hub 42 passes through the hole 35 of the plate 34 and then through the hole 32 of the plate 31 and is fixed thereto by means of a bearing 41.

The anti-rotation system 20 can be produced with any other torsionally rigid joint designed to connect two drive shafts. More in particular, it can be produced with a joint for high misalignments that allows simpler assembly with respect to the universal joint as it can offset several types of misalignments, or it can be produced with a flexible rotary shaft, also capable of offsetting greater misalignments with respect to the universal joint.

The rotary table 11 can be produced, for example, with a cam device with output shaft provided with an indexing or oscillating movement, a worm gear reducer, a parallel shaft gear reducer, a harmonic gear reducer, an epicyclic gear reducer, a direct torque motor.

The rotary table 11 can be operated by a synchronous motor, an asynchronous motor, a stepping motor, a pneumatic actuator, a hydraulic actuator.

The rotary table 11 normally rotates through 360°, but it can be limited to 180° without excluding the freedom of adjustment of the tilt axis.

If wishing to tilt the mould holder surface 15 only about two orthogonal axes, the rotation of the rotary table 11 can be limited to 90°.

Operation of the invention appears evident to the person skilled in the art from the foregoing description and in particular is as follows.

The rotary table 11 rotates the assembly of kinematic mechanisms 14, while the mould holder surface 15 is stopped, taking the tilt axis A into the desired position.

On command, the gearmotor 40 tilts the upper base 33 with respect to the lower base 30 and then tilts the mould holder surface 15 by the desired angle.

The universal joint 21 allows tilting of the mould holder surface 15, while preventing it from rotating.

The rotary table 11 can be rotated again, maintaining the previously determined tilt angle.

The materials and the dimensions used can be any according to requirements and to the state of the art.

The system thus conceived is susceptible to numerous modifications and variants, all falling within the inventive concept; moreover, all details can be replaced by technically equivalent elements.

## Claims

1. A tiltable mould holder comprising a supporting surface (15) suitable to support a mould for the production of semi-finished polyurethane products, said mould holder comprises: a rotary table (11) and an assembly of kinematic mechanisms (14) positioned above said rotary table (11); said supporting surface (15) being a mould holder surface (15) positioned above said assembly of kinematic mechanisms (14); said assembly of kinematic mechanisms (14) comprises means for tilting said mould holder surface (15) with respect to said rotary table (11); said rotary table being capable of rotating said assembly of kinematic mechanisms (14); **characterised in that** said mould holder surface (15) is connected to a surface (12) of said rotary table (11) by means of a torsionally rigid joint designed to connect two drive shafts.

2. The mould holder according to claim 1, **characterised in that** said means for tilting said mould holder surface (15) comprise a gearmotor (40) that tilts said mould holder surface (15).

3. The mould holder according to claim 1, **characterised in that** said mould holder surface (15) is connected to said surface (12) by means of a universal joint (21).

4. The mould holder according to claim 1, **characterised in that** said assembly of kinematic mechanisms (14) comprises: a lower base (30) to be fixed on the rotatable portion of the surface (12); an upper base (33) connected to said mould holder (15).

5. The mould holder according to claim 4, **characterised in that**: two plates (31), opposite each other, each having a central hole (32), extend upwards from said base (30); two plates (34), opposite each other, each having a central hole (35), extend downwards from said upper base (33).

6. The mould holder according to claims 5 and 2, **characterised in that**: the axis of the gearmotor (40) passes through a first hole (32) of a plate (31) and is connected thereto by means of a bearing (41), then passes through the hole (35) of the plate (34) and is fixed integrally thereto; opposite the axis of the gearmotor (40) a hub (42) passes through the hole (35) of the plate (34), then into the hole (32) of the plate (31) and is fixed thereto by means of a bearing (41).

7. The mould holder according to claim 1, **characterised in that** said rotary table (11) is produced with a cam device with output shaft provided with indexing or oscillating movement, or with a worm gear reducer, or with a parallel shaft gear reducer, or with a harmonic gear reducer, or with an epicyclic gear reducer, or with a direct torque motor.

8. The mould holder according to claim 1 or 3, **characterised in that** said rotary table (11) comprises a central through hole (13) and **in that** said joint is substantially coaxial with the rotation axis of said rotary table (11).

9. A method for tilting a mould holder for the production of semi-finished polyurethane products according to claim 1, comprising the steps of: maintaining said rotary table (11) fixed; rotating an assembly of kinematic mechanisms (14) that allows said mould holder to tilt.

## Patentansprüche

1. Ein kippbarer Formhalter, welcher eine entsprechende Tragfläche (15) umfasst, die geeignet ist, eine Form für die Herstellung von halbfertigen Polyurethanprodukten zu halten, wobei der genannte Formhalter jeweils Folgendes umfasst: einen Drehtisch (11) und eine Baugruppe kinematischer Mechanismen (14), die über dem genannten Drehtisch (11) angeordnet ist; wobei die genannte Tragfläche (15) eine Formhaltefläche (15) ist, welche jeweils über der genannten Baugruppe kinematischer Mechanismen (14) angeordnet ist; wobei die genannte Baugruppe kinematischer Mechanismen (14) jeweils Elemente zum Kippen der genannten Formhaltefläche (15) in Bezug auf den genannten Drehtisch (11) umfasst; wobei der genannte Drehtisch die genannte Baugruppe kinematischer Mechanismen (14) drehen kann; **dadurch gekennzeichnet, dass** die genannte Formhaltefläche (15) jeweils mit einer entsprechenden Oberfläche (12) des genannten Drehtischs (11) mit Hilfe eines verwindungssteifen Anschlussstücks verbunden ist, das so ausgelegt ist, dass es jeweils zwei Antriebswellen verbindet.

2. Der Formhalter gemäß Anspruch 1, **dadurch gekennzeichnet, dass** die genannten Elemente zum Kippen der genannten Formhaltefläche (15) einen entsprechenden Getriebemotor (40) umfassen, welcher die genannte Formhaltefläche (15) kippt.

3. Der Formhalter gemäß Anspruch 1, **dadurch gekennzeichnet, dass** die genannte Formhaltefläche (15) jeweils mit der genannten Oberfläche (12) mit Hilfe eines Kreuzgelenks (21) verbunden ist.

4. Der Formhalter gemäß Anspruch 1, **dadurch gekennzeichnet, dass** die genannte Baugruppe kinematischer Mechanismen (14) jeweils Folgendes umfasst: eine untere Basis (30), welche an dem drehbaren Bereich der Oberfläche (12) befestigt werden muss, und eine obere Basis (33), die mit dem genannten Formhalter (15) verbunden ist.

5. Der Formhalter gemäß Anspruch 4, **dadurch gekennzeichnet, dass**: zwei einander gegenüberliegende Platten (31), welche jeweils eine mittige Öffnung (32) aufweisen, sich von der genannten Basis (30) nach oben erstrecken; und zwei einander gegenüberliegende Platten (34), welche jeweils eine mittige Öffnung (35) aufweisen, sich von der genannten oberen Basis (33) nach unten erstrecken.

6. Der Formhalter gemäß den Ansprüchen 5 und 2, **dadurch gekennzeichnet, dass**: die Achse des Getriebemotors (40) durch eine erste Öffnung (32) einer Platte (31) hindurch verläuft und damit mit Hilfe eines entsprechenden Lagers (41) verbunden ist, dann durch die Öffnung (35) der Platte (34) hindurch verläuft und daran verblockt befestigt ist; gegenüber der Achse des Getriebemotors (40) eine entsprechende Buchse (42) durch die Öffnung (35) der Platte (34), dann durch die Öffnung (32) der Platte (31) verläuft und daran mit Hilfe eines entsprechenden Lagers (41) befestigt ist.

7. Der Formhalter gemäß Anspruch 1, **dadurch gekennzeichnet, dass** der genannte Drehtisch (11) mit einer entsprechenden Nockenvorrichtung mit Abtriebswelle hergestellt wird, welche mit Schalt- oder oszillierender Bewegung ausgerüstet ist, bzw. mit einem Schneckengetriebe oder einem Parallelwellenuntersetzungsgetriebe, oder einem harmonischen Untersetzungsgetriebe, oder einem Planetenuntersetzungsgetriebe, oder einem Direkt-Torquemotor.

8. Der Formhalter gemäß Anspruch 1 oder 3, **dadurch gekennzeichnet, dass** der genannte Drehtisch (11) eine durchgehende mittige Öffnung (13) umfasst, sowie dadurch, dass das genannte Anschlussstück im Wesentlichen koaxial mit der Drehachse des genannten Drehtischs (11) ist.

9. Ein Verfahren zum Kippen eines Formhalters für die Herstellung von halbfertigen Polyurethanprodukten gemäß Anspruch 1, welches jeweils folgende Schritte umfasst: die Beibehaltung der Fixierung des genannten Drehtischs (11); die Drehung einer Baugruppe kinematischer Mechanismen (14), welche dem genannten Formhalter die entsprechende Kippbewegung ermöglicht.

## Revendications

1. Porte-moule inclinable comprenant une surface de support (15) pouvant supporter un moule pour la production de produits semi-finis en polyuréthane, ledit porte-moule comprend: une table rotative (11) et un ensemble de mécanismes cinématiques (14) positionné au-dessus de ladite table rotative (11); ladite surface de support (15) étant une surface porte-moule (15) positionnée au-dessus dudit ensemble de mécanismes cinématiques (14); ledit ensemble de mécanismes cinématiques (14) comprend des moyens permettant d'incliner ladite surface porte-moule (15) par rapport à ladite table rotative (11); ladite table rotative pouvant faire tourner ledit ensemble de mécanismes cinématiques (14); **caractérisé en ce que** ladite surface porte-moule (15) est reliée à une surface (12) de ladite table rotative (11) au moyen d'une articulation rigide en torsion conçue pour relier deux arbres d'entraînement.

2. Porte-moule selon la revendication 1, **caractérisé en ce que** lesdits moyens d'inclinaison de la surface porte-moule (15) comprennent un motoréducteur (40) qui incline ladite surface porte-moule (15).

3. Porte-moule selon la revendication 1, **caractérisé en ce que** ladite surface porte-moule (15) est reliée à ladite surface (12) au moyen d'un joint universel (21).

4. Porte-moule selon la revendication 1, **caractérisé en ce que** ledit ensemble de mécanismes cinématiques (14) comprend: une base inférieure (30) à fixer sur la partie rotative de la surface (12); une base supérieure (33) reliée audit porte-moule (15).

5. Porte-moule selon la revendication 4, **caractérisé en ce que**: deux plaques (31), opposées l'une à l'autre, présentant chacune un trou central (32), s'étendent vers le haut à partir de ladite base (30); deux plaques (34), opposées l'une à l'autre, présentant chacune un trou central (35), s'étendent vers le bas à partir de ladite base supérieure (33).

6. Porte-moule selon les revendications 5 et 2, **caractérisé en ce que**: l'axe du motoréducteur (40) passe par un premier trou (32) d'une plaque (31) et y est relié au moyen d'un palier (41), puis passe par le trou (35) de la plaque (34) et y est fixé intégralement; à l'opposé de l'axe du motoréducteur (40), un moyeu (42) passe par le trou (35) de la plaque (34), puis dans le trou (32) de la plaque (31) et y est fixé au moyen d'un palier (41) .

7. Porte-moule selon la revendication 1, **caractérisé en ce que** ladite table rotative (11) peut être réalisée avec un dispositif à cames dont l'arbre de sortie est doté d'un mouvement d'indexation ou d'oscillation, ou avec un réducteur à vis sans fin, ou avec un réducteur à arbres parallèles, ou avec un réducteur à engrenages harmoniques, ou avec un réducteur à engrenages épicycloïdaux, ou avec un moteur à couple direct.

8. Porte-moule selon la revendication 1 ou 3, **caractérisé en ce que** ladite table rotative (11) comprend un trou central traversant (13) et **en ce que** ladite articulation est sensiblement coaxiale avec l'axe de rotation de ladite table rotative (11) .

9. Procédé d'inclinaison d'un porte-moule pour la fabrication de produits semi-finis en polyuréthane selon la revendication 1, comprenant les étapes suivantes: le maintien fixe de ladite table rotative (11); la mise en rotation d'un ensemble de mécanismes cinématiques (14) permettant l'inclinaison dudit porte-moule.
